# FASCICULE DE BREVET EUROPEEN

(11) **EP 0 370 884 B1**
(45) Date de publication et mention de la délivrance du brevet: **26.01.1994**
(21) Numéro de dépôt: 89403189.7
(22) Date de dépôt: 20.11.1989
(51) Int. Cl.: G21C 3/18

(54) **Crayon d'élément combustible pour réacteur nucléaire refroidi à l'eau**
Brennelementbündelstab für Druckwasserkernreaktor
Fuel element rod for a pressurized-water nuclear reactor

(30) Priorité: 22.11.1988 FR 8815155
(43) Date de publication de la demande: 30.05.1990
(73) Titulaire: COMMISSARIAT A L'ENERGIE ATOMIQUE, 75015 Paris Cédex 15 (FR)
(72) Inventeur: Le Maréchal, Roger, F-91700 Sainte Geneviève des Bois (FR); Mauny, Pierre, F-78350 Jouy en Josas (FR)
(74) Mandataire: Mongrédien, André

(56) Documents cités:
- EP-A- 0 137 675

## Description

L'invention concerne le domaine des éléments combustibles pour réacteurs nucléaires refroidis à l'eau.

Pour de tels réacteurs nucléaires, l'industrie nucléaire conçoit et fabrique des combustibles sous forme de "crayons", destinés à être réunis dans le réacteur en faisceaux parallèles sous forme d'assemblages, et maintenus en place suivant un réseau régulier, par les éléments de structure de cet assemblage.

Dans le réacteur, ces faisceaux de crayons sont en position verticale.

Les crayons combustibles comportent, généralement et de façon connue, une gaine métallique tubulaire, le plus souvent en alliage de zirconium, renfermant des empilements de pastilles de matériau fissile, un oxyde d'uranium fritté, un oxyde mixte uranium-plutonium, ou tout autre matière fissile, dopée ou non avec un absorbant consommable ; elles sont empilées à l'intérieur de la gaine suivant sa direction axiale.

La gaine est fermée à ses extrémités par deux bouchons en alliage de zirconium ; l'étanchéité du montage est assurée par soudage desdits bouchons aux extrémités de la gaine.

La colonne de pastilles de combustible est maintenue en place, notamment pendant les transports et les manutentions qui précèdent la mise en réacteur des assemblages, par un ressort hélicoïdal, situé à l'intérieur de la partie supérieure de la gaine, et comprimé entre la pastille supérieure de la colonne de combustible et le bouchon supérieur du crayon.

Dans les réacteurs nucléaires refroidis par de l'eau ordinaire sous pression, la surface extérieure de la gaine est soumise en service à une pression voisine de 16 MPa, qui est la pression du fluide réfrigérant. Pour éviter toute déformation des crayons, on maintient à l'intérieur de la gaine, après son remplissage par les pastilles combustibles et sa fermeture par les bouchons étanches, une pression d'un gaz inerte bon conducteur thermique, qui peut être comprise entre 0,1 et 8 MPa.

Cette pression interne, accrue par l'expansion thermique du gaz inerte en service et le dégagement des gaz de fission, confère aux crayons combustibles une stabilité mécanique suffisante pour limiter les effets de l'affaissement de la gaine et sa mise en contact avec les pastilles combustibles. Le logement du ressort, à la partie supérieure du crayon combustible, constitue la chambre d'expansion. Le volume de cette chambre d'expansion joue un rôle primordial pour régulariser les évolutions de la pression interne du crayon combustible. Cette chambre d'expansion sert en même temps à recueillir les gaz de fission qui s'échappent du combustible au fur et à mesure du développement de la réaction en chaîne pendant le fonctionnement du réacteur.

Le ressort, le plus souvent en acier inoxydable austénitique, est calculé de telle sorte qu'il applique une force sur l'empilement de combustible susceptible de compenser une accélération de l'ordre de 6g. Son volume doit être minimal afin de laisser le maximum de place libre dans la chambre d'expansion. En raison du grandissement des crayons sous irradiation, il n'est pas possible en effet d'augmenter exagérément la hauteur de la chambre d'expansion.

Un crayon combustible peut avoir une longueur inférieureà 1m dans le cas d'un réacteur expérimental, et une longueur supérieure à 4m dans certains réacteurs de puissance.

Pour certaines conceptions récentes de réacteurs nucléaires, un perfectionnement connu à ces crayons combustibles consiste à les fractionner en crayons de faible longueur, ou tronçons de crayon, réunis bout à bout. Ces tronçons de crayons constituent autant de crayons autonomes avec leur propre colonne de combustible, leur ressort, leur chambre d'expansion et leurs bouchons supérieur et inférieur.

Cette nouvelle disposition peut être mise à profit notamment pour réaliser des couvertures axiales. Le crayon peut comporter par exemple trois tronçons : un tronçon central de grande longueur et deux tronçons courts en extrémité. Chaque tronçon est alors individualisé du point de vue de sa contribution à la réaction neutronique qui s'établit dans le coeur du réacteur.

Par exemple, les tronçons d'extrémité peuvent être chargés avec des pastilles d'enrichissement différent. Ces tronçons peuvent être remplacés au cours de la vie du crayon.

De même, lors du retraitement, les tronçons peuvent être détachés et traités séparément du fait qu'ils n'ont pas nécessairement les mêmes enrichissements au départ et qu'ils n'ont pas été soumis au même flux.

On peut aussi imaginer des combinaisons avec un plus grand nombre de tronçons, soit à des fins industrielles, soit à des fins expérimentales.

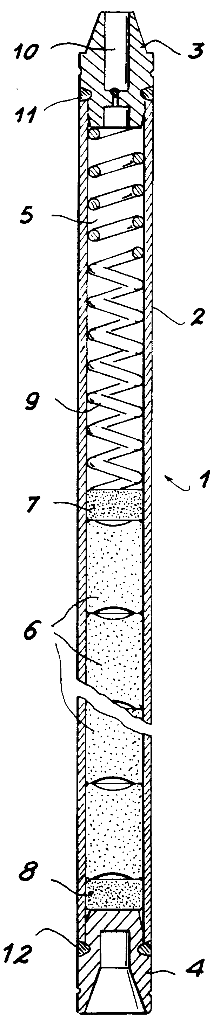

Une telle structure connue d'un tronçon de crayon d'élément combustible est représentée sur la figure unique ci-jointe. Sur cette figure on voit le tronçon de crayon 1 composé de sa gaine 2 en alliage de zirconium, fermée aux deux extrémités par un bouchon également en alliage de zirconium, à savoir le bouchon supérieur 3 et le bouchon inférieur 4. A l'intérieur de la gaine 2 se trouvent essentiellement deux compartiments, à savoir, dans la partie haute la chambre d'expansion 5 et dans la partie basse les pastilles de combustible 6. L'empilement de pastilles combustible 6 est encadré par les deux pastilles isolantes 7 et 8 en alumine, zircone ou hafnone. Dans certains cas, on peut n'utiliser que la pastille inférieure 8. Le rôle de ces pastilles, à propriétés d'isolation thermique, et éventuellement d'absorption neutronique, est d'éviter une augmentation de température en regard des extrémités de la colonne de pastilles combustibles, donc une surchauffe du bouchon 4 et de l'extrémité du ressort 9. Dans la chambre d'expansion 5 se trouve le ressort 9 de compression de la colonne de pastilles combustible 6, ce ressort 9 étant comprimé entre le bouchon supérieur 3 et la pastille isolante 7 terminant l'empilement des pastilles 6 en partie haute. On peut remarquer encore que les bouchons 3 et 4 ont des formes complémentaires permettant l'insertion à la suite les uns des autres de plusieurs tronçons de crayon identiques à celui de la figure et que le bouchon 3 comporte un logement 10 destiné à recevoir un matériau absorbant les neutrons pour compenser le pic de flux neutronique dont il sera parlé ci-après. Enfin, les bouchons 3 et 4 sont soudés sur la gaine 2 à l'aide des cordons de soudure 11 et 12.

Une telle structure des crayons de combustible présente néanmoins de sérieux inconvénients du fait des pics de flux neutronique qui apparaissent au coeur du réacteur, dans les zones déficitaires en atomes absorbants, c'est-à-dire à l'emplacement des chambres d'expansion des tronçons autres que le tronçon supérieur, et au niveau des bouchons intermédiaires.

En effet, si le matériau nucléaire produit la réaction en chaîne génératrice de neutrons, ce matériau est également absorbant vis-à-vis des neutrons et il s'établit ainsi un équilibre neutronique au sein de ce matériau. Dans les chambres d'expansion en revanche, vides en dehors du ressort, le flux neutronique est plus intense que dans le matériau combustible en raison du déficit d'absorption. Il en résulte ainsi, aux extrémités des empilements, si l'on ne prend pas de précautions spéciales, des zones affectées par un pic de flux neutronique entraînant des points chauds inacceptables sur le crayon concerné et les crayons voisins.

Au niveau des bouchons intermédiaires 3 et 4 entre les différents tronçons, la solution de ce problème neutronique consiste à utiliser des bouchons de hafnium, matériau absorbant les neutrons qui se soude bien avec les alliages de zirconium. La continuité d'absorption neutronique peut être assurée également par des inserts en matériau absorbant (hafnium ou autre) emprisonnés dans les bouchons intermédiaires.

Au niveau des chambres d'expansion 5, la continuité d'absorption neutronique est plus délicate à réaliser.

Dans des essais réalisés antérieurement, on a cherché, expérimentalement, à contourner cet obstacle en introduisant au voisinage, au centre, ou autour du ressort, des pastilles ou des inserts en matériau absorbant, du hafnium, le plus souvent.

Malheureusement, ces éléments absorbants coexistent avec le ressort et occupent une fraction importante du volume de la chambre d'expansion, jusqu'à 25% par exemple, et il s'ensuit qu'il faut allonger celle-ci pour maintenir le volume nécessaire aux gaz de fission, et ce au détriment de la colonne de combustible. D'autre part ces éléments absorbants ne peuvent pas en général être présents sur toute la hauteur de la chambre d'expansion. Ils doivent laisser un espace libre de 15mm à 20mm de long pour la dilatation longitudinale de la colonne de combustible lorsque celle-ci s'échauffe. Cet espace libre sans absorbant perturbe bien entendu le flux neutronique, de la même façon que la chambre d'expansion sans absorbant.

Jusqu'à ce jour par conséquent, les deux problèmes que sont le maintien des pastilles dans les crayons, notamment pendant leur transport, et la compensation du manque d'absorption des neutrons dans la chambre d'expansion, ne pouvaient être résolus que par la présence simultanée de deux moyens différents, un ressort et un insert absorbant, avec tous les inconvénients précédemment rappelés de leur coexistence spatiale dans la chambre d'expansion.

La présente invention a justement pour objet un crayon d'élément combustible pour réacteur nucléaire refroidi à l''eau légère sous pression qui résoud d'une manière particulièrement simple les problèmes précédents.

Ce crayon d'élément combustible se caractérise essentiellement en ce que le ressort situé dans sa chambre d'expansion est utilisé à la fois pour le maintien en place des pastilles et la compensation de l'absorption des neutrons dans cette chambre d'expansion, et est constitué en hafnium.

En effet, le demandeur a trouvé, et ce de façon inattendue, que le volume des ressorts usuels en acier est voisin de celui du hafnium nécessaire pour produire dans la chambre d'expansion l'absorption neutronique conduisant à une répartition uniforme du flux neutronique. En optimisant par conséquent la géométrie du ressort, c'est-à-dire le diamètre du fil et le nombre de spires, on obtient exactement le volume d'hafnium souhaité.

Bien entendu, l'Homme de métier peut recourir à tous traitements métallurgiques connus, pour obtenir que le hafnium constituant le ressort ait toutes les qualités élastiques requises. En particulier, un traitement métallurgique particulier du hafnium, portant notamment sur une optimisation du taux d'écrouissage, en liaison éventuelle avec l'addition d'éléments appropriés accroissant la limite d'élasticité, est susceptible de conférer à ce métal des propriétés mécaniques adéquates pour constituer le ressort de maintien des pastilles de combustible de la chambre d'expansion d'un crayon (ou d'un tronçon de crayon) d'élément combustible.

Selon la présente invention, les calculs ont montré qu'un ressort en hafnium, occupant toute la hauteur de la chambre d'expansion permettait d'exercer une force correspondant à celle d'une accélération de 6g sur la colonne combustible tout en n'occupant que 20% du volume de la chambre d'expansion. Cette quantité de hafnium et sa répartition, permettent en outre d'aplanir harmonieusement le flux neutronique.

D'autre part grâce à son point de fusion élevé, le hafnium ne risque pas de fondre lors de la liaison par soudage du bouchon supérieur avec la gaine, ni en cours de fonctionnement, même légèrement hors normes, du crayon.

Le ressort en hafnium conforme à l'invention peut être utilisé aussi bien dans les chambres d'expansion des tronçons de crayons situés en plein flux des réacteurs, que comme ressort du tronçon supérieur. Dans ce cas, il sert d'absorbant pour limiter le flux neutronique sur les pièces supérieures des assemblages, limitant de ce fait leur dégradation.

En résumé, le ressort en hafnium selon l'invention, utilisé dans un crayon combustible nucléaire, présente quatre avantages par rapport aux solutions connues, tout en maintenant l'intégrité de la première barrière de confinement constituée par la gaine des crayons :
1) - en assurant la continuité de l'absorption neutronique tout le long de cette chambre d'expansion, il égalise lé flux neutronique et supprime les pics dans ces chambres d'expansion.
2) - utilisé en partie supérieure d'un crayon, il limite les fuites neutroniques vers le haut des assemblages ;
3) - en cas d'utilisation dans des tronçons de crayons indépendants, situés en plein flux, il évite d'accroître exagérément la hauteur de la chambre d'expansion ;

A titre d'exemple non limitatif on donnera ci-après les caractéristiques d'un tronçon de crayon équipé d'un ressort en hafnium conforme à l'invention :
- longueur totale du tronçon de crayon : 527,5 mm ;
- longueur de la colonne de combustible : 444,75 mm ;
- diamètre intérieur de la gaine : 8,36 mm ;
- diamètre extérieur des pastilles de combustible : 8,19 mm ;
- hauteur de la chambre d'expansion : 46 mm.

Dans cet exemple particulier, les caractéristiques du ressort sont les suivantes :
- matière : hafnium de qualité nucléaire ;
- diamètre du fil : 1,4 mm ;
- diamètre du ressort : 7,7 mm ;
- nombre de spires : 22 ;
- longueur du ressort libre : 55 mm ;
- valeur du module de torsion : 45000 MPa ;
- taux d'écrouissage du fil : 50%.

## Revendications

1. Crayon d'élément combustible pour réacteur nucléaire refroidi à l'eau sous pression, comprenant une gaine cylindrique (2) en alliage transparent aux neutrons fermée à chacune de ses extrémités par un bouchon (3, 4), l'un supérieur (3) et l'autre inférieur (4), et comportant une première portion dans laquelle sont empilées des pastilles (6) de matériau combustible proprement dit et une deuxième portion, ou chambre d'expansion (5), contenant un ressort comprimé (9) s'appuyant à une extrémité sur le bouchon supérieur (3) et à l'autre extrémité sur l'empilement de pastilles combustibles (6) qu'il maintient en position, caractérisé en ce que le ressort constitué en hafnium est utilisé à la fois pour le maintien en place des pastilles et la compensation de l'absorption des neutrons dans cette chambre d'expansion.

## Claims

1. Fuel element rod for pressurized water-cooled nuclear reactor, having a cylindrical can (2) made from an alloy transparent to neutrons and sealed at each of its ends by a plug (3,4), namely upper plug (3) and lower plug (4), and having a first portion in which are stacked fuel material pellets (6) and a second portion or expansion chamber (5) containing a compressed spring (9) bearing at one end on the upper plug (3) and at the other end on the fuel pellet stack (6) which it maintains in position, characterized in that the spring, made from hafnium, is used both for maintaining in place the pellets and for compensating the absorption of the neutrons in said expansion chamber.

## Patentansprüche

1. Brennelementbündelstab für Druckwasserkernreaktor, umfassend eine zylindrische Hülse (2) aus neutronendurchlässiger Legierung, verschlossen an jedem ihrer Enden durch einen Stopfen (3, 4), der eine oben (3) und der anderen unten (4) angeordnet, und umfassend ein erstes Teilstück, in dem die eigentlichen Brennstofftabletten (6) angehäuft sind, und ein zweites Teilstück, beziehungsweise eine Expansionskammer (5), enthaltend eine gespannte Feder (9), die sich mit einem Ende auf dem obenliegenden Stopfen (3) abstützt, und mit dem anderen Ende auf der Brennstofftablettenanhäufung (6), die sie in Position hält,
dadurch **gekennzeichnet**,
daß die aus Hafnium bestehende Feder zugleich für das Instellunghalten der Tabletten und die Kompensierung der Absorbtion der Neutronen in dieser Expansionskammer verwendet wird.
